# EUROPEAN PATENT APPLICATION

(11) **EP 3 047 979 A1**
(43) Date of publication of application: **27.07.2016**
(21) Application number: 16151655.4
(22) Date of filing: 18.01.2016
(51) Int. Cl.: B60B 27/04, B60B 27/02

(54) **A HUB ASSEMBLY FOR A BICYCLE WHEEL**

(30) Priority: 23.01.2015 US 201562107277 P
(71) Applicant: Specialized Bicycle Components, Inc., Morgan Hill, CA 95037 (US)
(72) Inventor: CHAMBERLAIN, Jason L., Morgan Hill, CA California 95037 (US)
(74) Representative: Grünecker Patent- und Rechtsanwälte PartG mbB

(57) **Abstract**

A bicycle (1) hub assembly (6) having a rotational axis and comprising a sidewall (14) defining first and second ends (28), a connector body coupled to the sidewall first end (27,28), and a first flange (32) extending radially outward and axially away from an outer surface of the sidewall (14) at the sidewall first end (28) such that the first flange (32) axially overlaps with a portion of the connector body. The hub assembly (6) can further comprise a second flange (34) extending radially outwardly from an outer surface of the sidewall (14) at the second end, wherein the first flange (32) projects radially farther away from the sidewall (14) than the second flange (34). In one embodiment, the first flange (32) at least partially defines a concave receptacle (40) that houses at least a portion of the connector body. In this embodiment, the hub assembly (6) can further comprise an adapter (41) body positioned around the connector body and at least partially in the concave receptacle (40).

## Description

### BACKGROUND

The present invention relates to wheels for bicycles and more specifically to hubs for rear wheels of bicycles.

A bicycle wheel typically include a rim, a hub, a cogset mounted to the hub via a connector body for one-way rotation, and a plurality of spokes extending between the hub and the rim.

Various wheel configurations have been attempted to achieve desirable wheel attributes of reduced weight and increased lateral stiffness over a traditional spoked bicycle wheel. For example, in a typical attempt to produce a lightweight wheel, a reduction in weight commonly results in a corresponding reduction in wheel stiffness. Conversely, with an attempt to increase wheel stiffness, such as by increasing the number or size of the spokes, increased weight is often an undesirable by-product. Increasing the lateral width of the connection between the hub and the spokes typically increases wheel stiffness without a substantial increase in weight. However, the amount of space available to mount the cogset limits the available width of the hub/spoke interface.

Multi-speed bicycles traditionally utilize a cogset having a number of cogs or gears. Prior art cogsets are commonly mounted for one-way rotation to the hub by a connector body, which may comprise a freewheel or freehub body. Freewheels traditionally include a female portion of a threaded connector system which may be fixedly mounted to a fixed cluster of cogs. Freehub bodies may have a generally cylindrical shape and a splined outer surface configured to mate with a complementary splined configuration defined by the cogs. A number of complementary spline configurations between the freehub body and the cogset are possible, and the number of cogs that are mounted to the freehub varies according to the spacing between the cogs and width of each cog. Although the number of cogs attachable to the freehub body may vary, the length of prior art freehub bodies has remained largely constant.

Accordingly, there is a need in the art for a wheel having increased stiffness and reduced weight that utilizes commercially available connector bodies.

### SUMMARY

The present invention provides a bicycle hub assembly having a rotational axis and comprising a sidewall defining a bore coaxial with the rotational axis and a first length between first and second ends of the sidewall, a connector body (e.g., a freehub body) coupled to the sidewall first end, and a first flange extending radially outward and axially away from an outer surface of the sidewall at the sidewall first end such that the first flange axially overlaps (e.g., at least 2mm, 5mm, or 7mm) with a portion of the connector body. The first flange can define a plurality of spoke attachment holes adjacent a radially outermost periphery to facilitate incorporating the hub assembly into a bicycle wheel.

The hub assembly can further comprise a second flange extending radially outwardly from an outer surface of the sidewall at the second end, wherein the first flange projects radially farther away from the sidewall than the second flange. Preferably, the sidewall and first flange define a second length between an end of the first flange and the sidewall second end, the second length being larger than the first length.

In one embodiment, and also at least partially defines a concave receptacle that houses at least a portion of the connector body. In this embodiment, the hub assembly can further comprise an adapter body (e.g., generally frustoconically shaped) positioned around the connector body and at least partially in the concave receptacle. Preferably, the adapter body defines an adapter bore coaxial with the rotational axis. The concave receptacle can have an axial depth of at least 2 millimeters, preferably at least 5 millimeters, and more preferably at least 7 millimeters.

Other aspects of the invention will become apparent by consideration of the detailed description and accompanying drawings.

### BRIEF DESCRIPTION OF THE DRAWINGS

Fig. 1 shows a bicycle with one embodiment of a hub assembly in accordance with the present disclosure.
Fig. 2 shows a perspective view of one embodiment of a wheel hub and free-hub body in accordance with the present disclosure, with the cassette, spokes and wheel rim omitted for the sake of clarity.
Fig. 3 shows an exploded view of the assembly of Fig. 2.
Fig. 4 shows a cross-sectional view taken along line 4-4 of Fig. 2.
FIG. 5 shows a perspective sectional view of an alternative embodiment showing a two-piece cassette.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

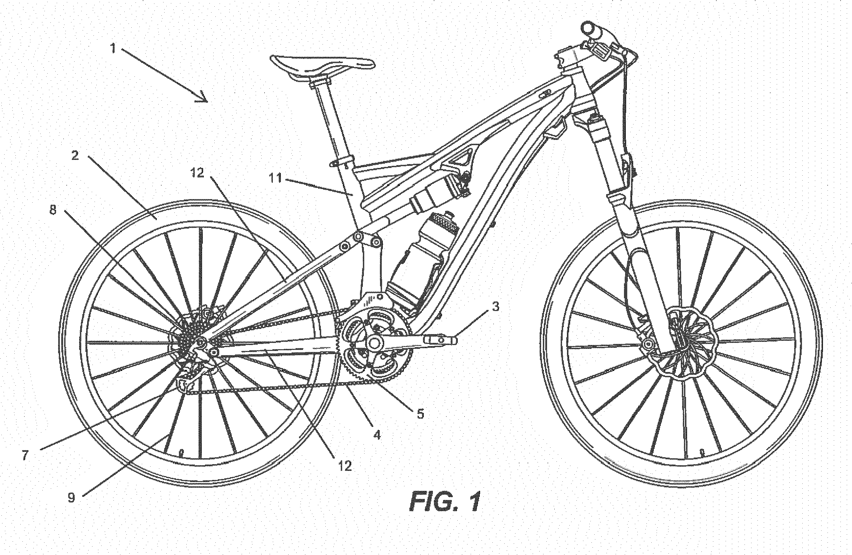

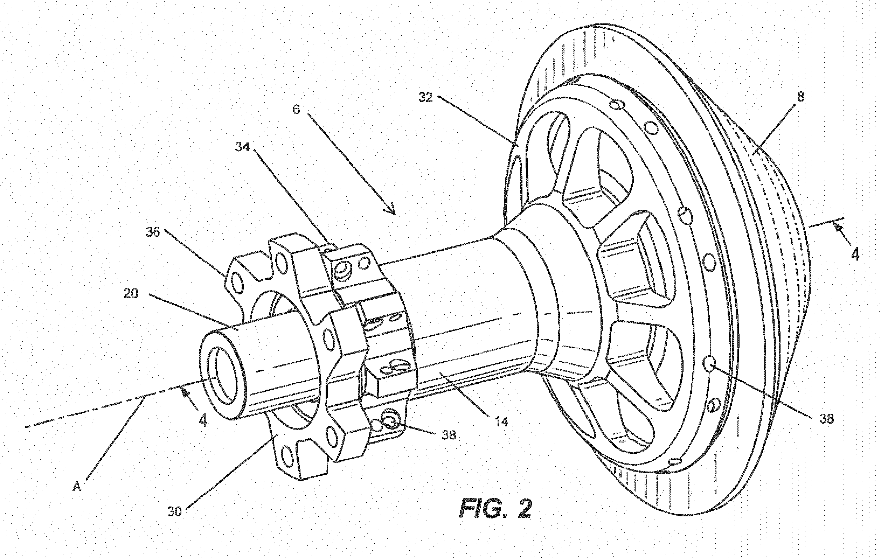

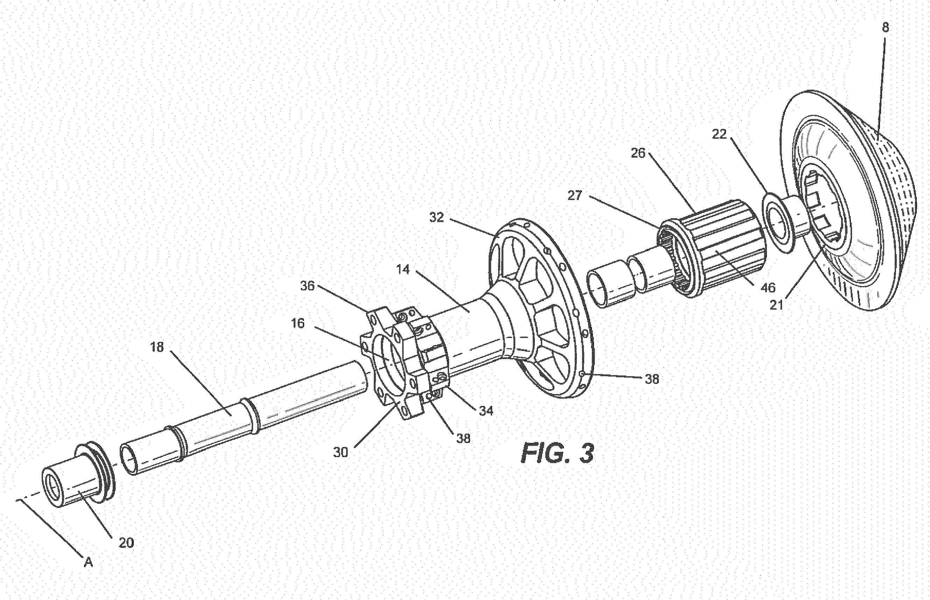

FIG. 1 depicts a bicycle 1 including a frame 11, pedals 3, pedal sprocket 5, chain 4, cogset 8, and rear wheel 2. The frame 11 includes stays 12 that connect a rear wheel 2 to the main portion of the bicycle frame 11. The rear wheel 2 is driven by pedals 3 via a chain 4. The links of the chain 4 are configured to interact with the pedal sprocket 5, which causes the chain 4 to rotate upon the rotation of the pedals 3. The chain 4 further interacts with a cogset 8 attached to a hub assembly 6 (see Figs. 2-4) by a one-way clutch device to cause the cogset 8 and hub assembly 6 to rotate, thus also rotating the rear wheel 2. The bicycle 1 further includes a derailleur 7 capable of moving the chain 4 between a plurality of sprockets on the cog set 8. Additionally, the rear wheel 2 includes a plurality of spokes 9 for providing structural integrity and strength of the rear wheel.

Referring to Figs. 2-4, the hub assembly 6 includes a hub body having a sidewall 14 defining a bore 16 that defines a rotational axis A. The sidewall 14 extends a first length L1 between first and second ends 28, 30. The bore 16 is generally configured to receive an axle 18 having first and second end caps 20, 22, as is generally known in the art.

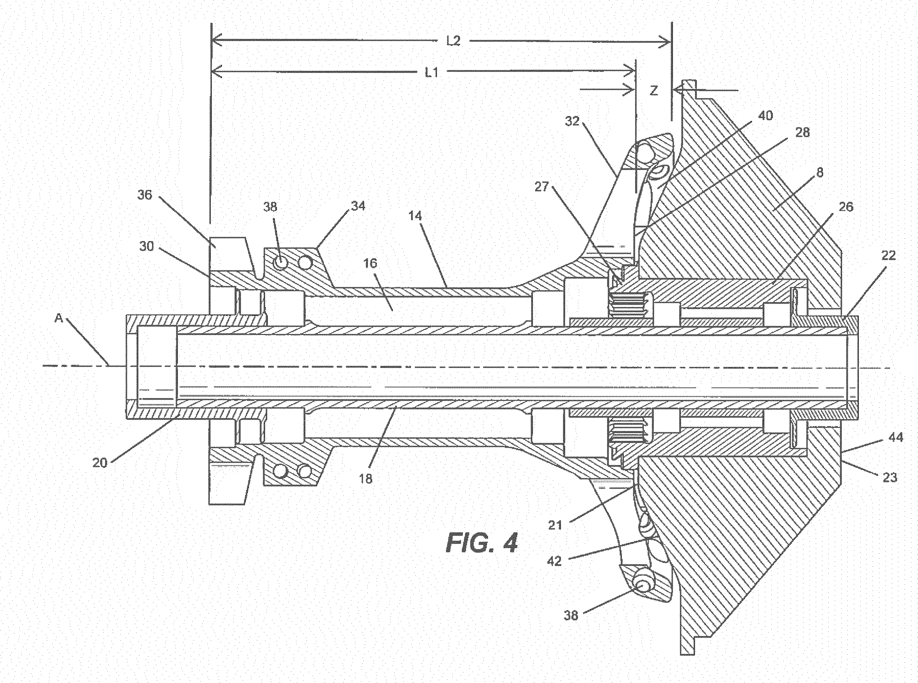

The cogset 8 is attached to the hub assembly 6 via a connector body in the form of a freehub 26 as shown in the embodiment illustrated in FIGS. 2 and 4. Alternatively, the connector body may comprise a threaded freewheel assembly (not shown). The cogset 8 includes a plurality of cogs (not shown) which have an incrementally smaller diameter progressing from an inboard side 21 adjacent the connection to the sidewall first end 28 to an outboard side 23 adjacent the second end cap 22.

Referring to the embodiment shown in FIG. 4, the first end 28 of the sidewall 14 is sized and configured to receive a first end 27 of the freehub 26. The freehub 26 is rotatably attached to the hub body at the freehub first end 27 via any of a number of one-way clutch assemblies known in the art. For example, a plurality of pawls (not shown) may project radially outwardly from the freehub and an inner surface of the hub body adjacent the hub first end 28 may include a plurality of ratchet teeth (not shown) having a ramp surface and a ledge (not shown). The pawls are configured to engage the ledge and drive the freehub 26 and wheel when the freehub 26 rotates in one direction, and ride over the ramp surface and past the ratchet teeth when the freehub 26 rotates in the opposite direction, as is generally known in the art.

As seen in FIGS. 2 and 4, a first flange 32 projects radially from the sidewall adjacent the sidewall first end 28 and a second flange 34 projects radially from the sidewall second end 30. The sidewall second end 30 and an axial end of the first flange cooperatively define a second length L2 that is longer than the first length L1. In the embodiment shown, a brake attachment assembly 36 is disposed at the sidewall second end 30, axially outwardly from the second flange 34. Referring to Figs. 2-4, the first flange 32 extends radially outwardly and angularly/axially away from the sidewall 14. In the illustrated embodiment, the first flange 32 extends radially farther away from the surface of the sidewall 14 than the second flange 34. As best seen in FIG. 4, the first flange 32 projects from the sidewall 14 so as to axially overlap with the freehub 26 a distance Z projecting from the sidewall first end 28. That is, at least a portion of the first flange 32 is positioned directly radially outward from the freehub 26 (in a direction perpendicular and radial to the rotational axis A). In the illustrated embodiment, the first flange 32 axially overlaps with approximately 7 mm of the freehub 26 projecting from the sidewall first end 28 (measured parallel to the axis A).

As seen in Fig. 4, the illustrated first flange 32 defines a concave receptacle 40 between the radially outermost periphery of the first flange 32 and the sidewall first end 28. The cogset 8 has first and second generally radial surfaces 42, 44 defined adjacent the inboard and outboard sides of the cogset 21, 23, respectively. In the embodiment of the cogset 8 depicted in FIG. 4, the first radial surface 42 has a generally convex shape. That is, at least a portion of the first radial surface 42 is not perpendicular to the axis A and has a generally frustoconical shape. The shape of the concave receptacle 40 is configured to complement and receive the convex shape of the first radial surface 42 of the cogset 8.

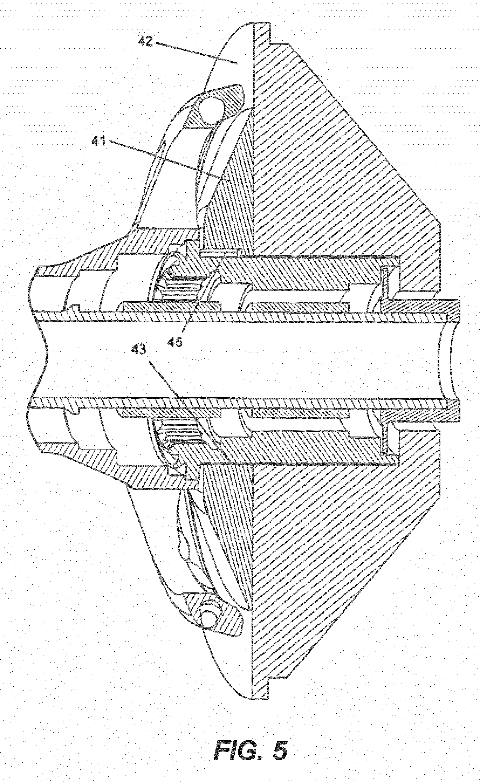

In an alternative embodiment, the cogset first radial surface 42 may define a plane perpendicular to the rotational axis A. In this embodiment, an adapter 41 (FIG. 5) defines an adapter bore 43 configured to slide over the freehub body 26 such that the adapter 41 is disposed in the concave receptacle 40 intermediate the sidewall first end 28 and the cogset first radial surface 42 as indicated by the arrow between FIGS. 2 and 5. The illustrated adapter 41 defines a plurality of negative splines 45 shaped to complement splines 46 on the freehub body and to ensure a snug, nonrotational fit. In the embodiment shown in FIG. 5, the adapter has a frustoconical shape configured to occupy the concave receptacle intermediate the sidewall first end 28 and the cogset first radial surface 42, but without making contact with the first flange 32. The use of the adapter precludes the need for a custom-shaped cogset. Instead, standard cogs (fewer than the maximum number of cogs) can be used and butted up against the adapter 41.

As depicted in FIG. 4, the flanges 32, 34 define a plurality of wheel spoke attachment locations 38 adjacent radially outermost peripheries of the first and second flanges 32 and 34. The illustrated wheel spoke attachment locations are configured for mounting J-bend spoke configurations, but can instead be configured to receive straight-pull spokes or a number of other spoke configurations. The configuration of the spokes 9 affects the lateral stiffness of the wheel. Accordingly, the wider the distance between spokes on opposing ends of the sidewall 14, the stiffer the wheel in general.

The freehub 26 in the illustrated embodiment is widely commercially available, and typically accommodates cogsets having a maximum number of cogs N, such as 9 or 10. However, the above-described hub is specifically designed to accommodate fewer than the maximum number of cogs N. Specifically, the overlapping first flange 32 of the above-described hub will prevent the use of one or more of the innermost cogs (i.e., on the left side of the free hub 26 in Fig. 4, in the area of the concave receptacle 40.For certain types of bicycling riding, such as for downhill racing, the innermost/largest cogs are generally not used, and thus the presence of the first flange 32 is generally not a concern. As noted above, the space defined by the concave receptacle can be filled either by a custom-shaped first radial surface 42 of the cogset (see Fig. 4) or a custom-shaped adapter 41 (Fig. 5).

The axial overlap between the connector body and the first flange 32 occurs at the spoke attachment locations 38, axially outboard of the connection between the connector body first end 27 and the sidewall first end 28. The result is that the connection between the spokes and the first flange occurs at a location more widely spaced than was previously possible with the given freehub, resulting in a shallower angle to the spokes on the right side of the wheel. Accordingly, the hub assembly 6 of the present disclosure increases the lateral stiffness of the rear wheel 2, can receive fewer than N cogs, yet can accommodate a commercially available freehub 26. Moreover, the increase in wheel stiffness does not come at the cost of requiring new shifters and a new rear derailleur 7, as the same spacing between cogs may be maintained regardless of the number of cogs actually mounted to the freehub 26.

Although the foregoing systems and methods have been described in terms of certain preferred embodiments, other embodiments will be apparent to those of ordinary skill in the art from the disclosure herein. Additionally, other combinations, omissions, substitutions and modifications will be apparent to the skilled artisan in view of the disclosure herein. While certain embodiments of the inventions have been described, these embodiments have been presented by way of example only, and are not intended to limit the scope of the inventions. Indeed, the novel methods and systems described herein may be embodied in a variety of other forms without departing from the spirit thereof. Accordingly, other combinations, omissions, substitutions and modifications will be apparent to the skilled artisan in view of the disclosure herein.

Various features and advantages of the invention are set forth in the following claims.

## Claims

1. A hub assembly for a bicycle wheel having a rotational axis and comprising:
a sidewall defining a bore coaxial with the rotational axis and a first length between first and second ends of the sidewall;
a connector body coupled to the sidewall first end; and
a first flange extending radially outward and axially away from an outer surface of the sidewall at the sidewall first end such that the first flange axially overlaps with a portion of the connector body.

2. The hub assembly of claim 1, wherein the first flange axially overlaps with at least 2 millimeters of the connector body.

3. The hub assembly of claim 1, wherein the first flange axially overlaps with at least 5 millimeters of the connector body.

4. The hub assembly of claim 1, wherein the first flange axially overlaps with at least 7 millimeters of the connector body.

5. The hub assembly of claim 1, wherein the first flange defines a plurality of spoke attachment holes adjacent a radially outermost periphery.

6. The hub assembly of claim 1, wherein the first flange at least partially defines a concave receptacle that houses at least a portion of the connector body.

7. The hub assembly of claim 6, further comprising an adapter body positioned around the connector body and at least partially in the concave receptacle.

8. The hub assembly of claim 7, wherein the adapter is generally frustoconically shaped.

9. The hub assembly of claim 1, wherein the connector body comprises a freehub body.

10. The hub assembly of claim 1, further comprising a second flange extending radially outwardly from an outer surface of the sidewall at the second end, wherein the first flange projects radially farther away from the sidewall than the second flange.

11. The hub assembly of claim 1, wherein the sidewall and first flange define a second length between an end of the first flange and the sidewall second end, the second length being larger than the first length.

12. A hub assembly for a bicycle wheel having a rotational axis, comprising:
a sidewall defining a bore coaxial with the rotational axis and extending a first length between first and second ends, the sidewall first end configured to receive a first end of a connector body;
a first flange extending radially outwardly from an outer surface of the sidewall at the sidewall first end, wherein the first flange projects radially outwardly and angularly away from the sidewall first end such that the first flange at least partially defines a concave receptacle adapted to house at least a portion of the connector body.

13. The hub assembly of claim 12, further comprising an adapter body positioned at least partially in the concave receptacle.

14. The hub assembly of claim 13, wherein the adapter is generally frustoconically shaped.

15. The hub assembly of claim 12 wherein an adapter body has first and second surfaces and defines an adapter bore coaxial with the rotational axis, the adapter body and bore configured to be received within the receptacle.

16. The hub assembly of claim 15, wherein the adapter is generally frustoconically shaped.

17. The hub assembly of claim 12, wherein the concave receptacle has an axial depth of at least 2 millimeters.

18. The hub assembly of claim 12, wherein the concave receptacle has an axial depth of at least 5 millimeters.

19. The hub assembly of claim 12, wherein the concave receptacle has an axial depth of at least 7 millimeters.
